# EUROPÄISCHE PATENTSCHRIFT

(11) **EP 0 751 020 B1**
(45) Veröffentlichungstag und Bekanntmachung des Hinweises auf die Patenterteilung: **15.09.1999**
(21) Anmeldenummer: 96103369.3
(22) Anmeldetag: 05.03.1996
(51) Int. Cl.: B60H 1/00, F16C 1/10

(54) **Bowdenzugverstellvorrichtung, insbesondere für Kraftfahrzeugheizung und -lüftung**
Cable control device, especially for heating and ventilation in motor vehicles
Dispositif de réglage à commande par câble, en particulier pour chauffage et ventilation de véhicule à moteur

(30) Priorität: 28.06.1995 DE 19523398
(43) Veröffentlichungstag der Anmeldung: 02.01.1997
(73) Patentinhaber: Mannesmann VDO Aktiengesellschaft, 60388 Frankfurt am Main (DE)
(72) Erfinder: Dessau, Jürgen, D-61267 Neu-Anspach (DE)
(74) Vertreter: Rassler, Andrea, Dipl.-Phys.

(56) Entgegenhaltungen:
- DE-A- 2 805 517
- DE-A- 3 841 719
- DE-C- 4 141 834
- DE-U- 8 218 443
- GB-A- 1 207 158
- US-A- 4 667 068

## Beschreibung

Die Erfindung bezieht sich auf eine Bowdenzugverstellvorrichtung, insbesondere für Kraftfahrzeugheizung und -lüftung, mit einem in einem gehäusefesten Lager schwenkbar gelagerten und in zwei Hauptteile unterteilten Hebel und daran angreifendem Bowdenzug sowie einem an seinem freien Ende angeordneten Betätigungsknopf.

Bowdenzugverstellvorrichtungen dieser Art sind zwar einfach im Aufbau, haben aber mehrere Nachteile. Ein wesentlicher Nachteil besteht darin, daß bei der Schwenkbewegung der Betätigungsknopf in seiner Mittellage sehr weit über die entsprechende Verblendung am Armaturenbrett hervorsteht, so daß von diesem hervorstehenden Hebel eine gewisse Verletzungsgefahr für die Fahrzeuginsassen ausgeht. Weiterhin besteht die Gefahr der unabsichtlichen Verschiebung, wenn sich der Verstellhebel in der weit vorstehenden Lage befindet. Aufgrund der Schwenkbewegung besteht somit keine Möglichkeit, den Hebel entlang seinem gesamten Verstellweg eng an der entsprechenden Verblendung des Armaturenbrettes zu führen. Somit besteht auch keine Möglichkeit, die Führungsbahn der Gestaltung des Armaturenbrettes anzupassen. Es besteht auch kein Raum für bestimmte Designvorstellungen.

Aus Druckschrift GB-A-1 207 158 sind Bowdenzugverstellvorrichtungen mit einem in einem gehäusefesten Lager schwenkbar gelagerten und in zwei Hauptteile unterteilten Hebel und daran angreifendem Bowdenzug sowie einem an seinem freien Ende angeordneten Betätigungsknopf bekannt. Eine der in diesem Dokument offenbarten Ausführungsformen weist einen zweiteiligen Hebel mit gegeneinander axial verschiebbaren Hebelteilen auf. Diese Vorrichtung weist den Nachteil des Vorstehens des Betätigungsknopfes von einer Bedientafel in Abhängigkeit von der Hebelstellung sowie eine vergleichsweise große Einbautiefe der Anordnung auf. Eine andere Ausführungsform beschreibt einen aus zwei starren Teilen bestehenden Hebel, dessen einer Teil entlang einer Geradführung verschiebbar und mittels eines Zapfens in einem Langloch des anderen Hebelteils geführt ist. Diese Vorrichtung weist nachteilig eine große Einbautiefe auf und ist aufgrund des permanenten Gleitens des Zapfens in dem Langloch sehr verschleißanfällig.

Aufgabe der Erfindung ist es, eine Bowdenzugverstellvorrichtung der eingangs erläuterten Art so auszugestalten, daß die Verletzungsgefahr und die Gefahr eines unbeabsichtigten Verstellens weitgehend ausgeschlossen sind und daß Möglichkeiten der Anpassung der Führungsbahn an das Armaturenbrett und sonstige Gestaltungsmöglichkeiten bestehen.

Diese Aufgabe wird ausgehend von einer Bowdenzugverstellvorrichtung der weiter oben angegebenen Art erfindungsgemäß dadurch gelöst, daß der erste Hauptteil des Hebels einen fest mit dem Betätigungsknopf verbundenen, in einer Kulisse geführten Kulissenstein und der zweite Hauptteil eine teleskopartig ineinanderschiebbare Schubstange umfaßt, die einerseits einen in einem am Kulissenstein angeordneten Lager gelenkig gelagerten Stößel und andererseits ein den Stößel aufnehmendes Gehäuse umfaßt, an dem der Bowdenzug angreiff und das in dem gehäusefesten Lager gelagert ist. Durch die teleskopartige Ausbildung des Hebels kann der Betätigungsknopf stets in der Ebene des Armaturenbretts bzw. der hierfür vorgesehenen Verblendung verbleiben, so daß dieser Betätigungsknopf eng anliegt und keine Verletzungsgefahr mehr darstellt. Außerdem ist die Gefahr eines unbeabsichtigten Verstellens aufgrund eines Hängenbleibens praktisch ausgeschlossen. Da der Betätigungsknopf aufgrund der teleskopartigen Verschiebung des Hebels in der Ebene des Armaturenbrettes geführt werden kann, sind die Gestaltungsmöglichkeiten des Armaturenbrettes erweitert.

Wenn in weiterer Ausgestaltung der Erfindung sowohl das Lager am Kulissenstein als auch das gehäusefeste Lager als Kugelgelenk oder auch als Kreuzgelenk ausgebildet sind, so besteht die weitere vorteilhafte Ausbildungsmöglichkeit, daß die Kulisse nach Art einer zwei- oder dreidimensional geführten Kurvenbahn gestaltet werden kann, da nicht nur der Betätigungsknopf in verhältnismäßig weiten Grenzen aufgrund der Ineinanderschiebbarkeit des Hebels in unterschiedlichen Abständen zum gehäusefesten Lager geführt werden kann, sondern der Betätigungsknopf kann aufgrund der Verwendung von Kugelgelenken oder Kreuzgelenken auch aus der sonst bei bekannten Hebeln üblichen Führungsebene herausgeführt werden, wodurch die Gestaltungsmöglichkeiten der Kulisse und des Armaturenbrettes wesentlich erweitert sind.

Um einen gewissen Schnappeffekt in Richtung auf die Endlagen zu erzielen, kann in weiterer Ausgestaltung der Erfindung die Schubstange in Richtung auf ihre ausgefahrene Lage durch eine Feder belastet sein. Dabei ist es zweckmäßig, wenn die Feder in dem den Stößel aufnehmenden Gehäuse angeordnet ist. Die Schubstange kann auch als Bewegungsdämpfer ausgebildet sein, um eine möglichst gleichbleibende Verschiebekraft aufbringen zu können und um ein selbsttätiges Auswandern in der Nähe der Endlage aufgrund der Federkraft zu vermeiden.

Die Erfindung wird nachfolgend anhand eines in der Zeichnung dargestellten Ausführungsbeispieles näher erläutert. In der Zeichnung zeigen:
- **Figur 1:**: eine Frontansicht einer die Bowdenzugverstellvorrichtung neben anderen Verstellknöpfen einer Heizungs- und Lüftungsbetätigungsfeldes aufnehmenden Verblendung eines Armaturenbrettes;
- **Figur 2:**: einen Schnitt nach der Linie II-II in Figur 1; und
- **Figur 3:**: einen Schnitt nach der Linie III-III in Figur 2.

Im Bereich einer Verblendung 1 eines in ein Armaturenbrett einsetzbaren Gehäuses 2 ist ein Betätigungsknopf 3 für die Regulierung der Luftverteilung im Inneren des Kraftfahrzeuges vorgesehen, der in einer sanften S-förmig gestalteten Schlitzführung 4 zwischen zwei Endstellungen 5 und 6 verschiebbar ist. Auf dieser Verblendung 1 sind noch drei Drehknöpfe 7 für weitere Heizungs- und Lüftungsbetätigungen angeordnet, die jedoch nicht zur Erfindung gehören und deshalb nicht näher beschrieben werden. Die mit dem Betätigungsknopf 3 zusammenhängende Betätigungsvorrichtung dient, wie aus den an den Anschlägen 5 und 6 angebrachten Symbolen erkennbar, in der am Anschlag 5 gelegenen Endstellung zur vollständigen Öffnung der Frischluftzufuhr und in der durch den Anschlag 6 bestimmten Endstellung zur Umschaltung auf Umluftbetrieb.

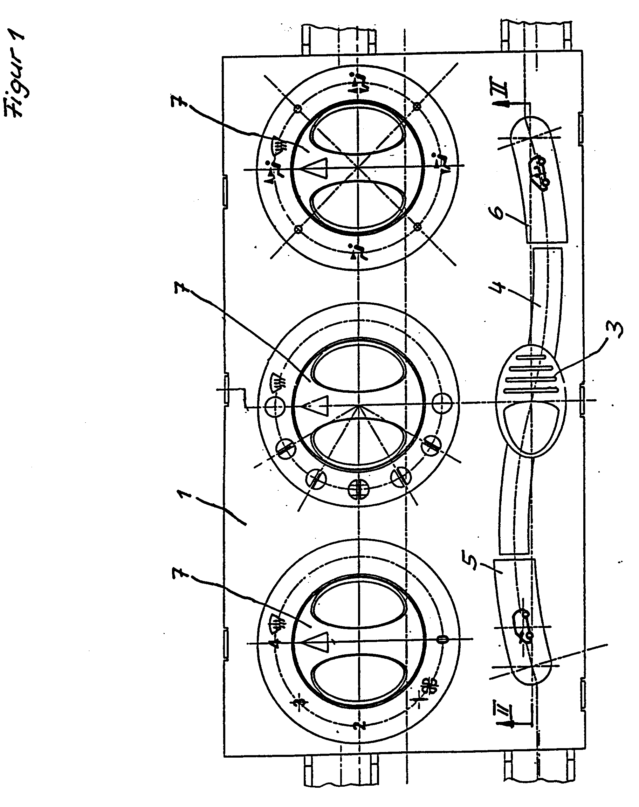

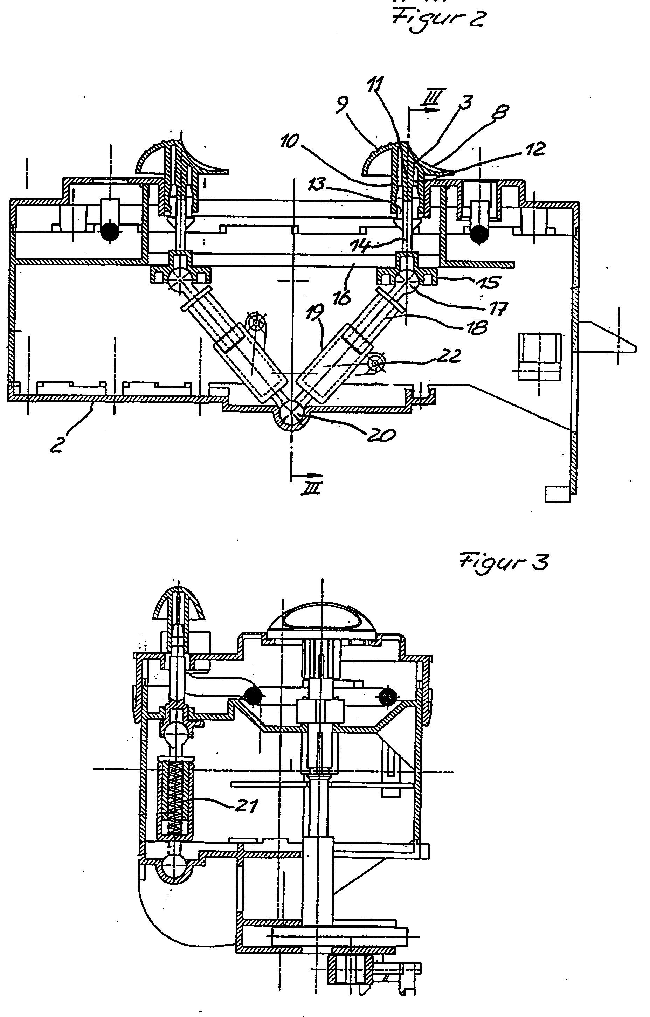

Wie aus den Figuren 2 und 3 erkennbar, ist der Betätigungsknopf 3 an seiner Oberfläche mit einer konkaven Betätigungsfläche 8 und einer konvexen Betätigungsfläche 9 ausgebildet, die mit einem zylindrischen Schaft 10 und einem im Inneren desselben angeordneten Kernes 11 verbunden sind. Zwischen dem zylindrischen Schaft 10 und dem Kern 11 verbleibt ein Spalt 12 in welchen ein Klemmnippel 13 einrastbar ist, der zur Verbindung des Betätigungsknopfes 3 mit einem Stift 14 dient, der fest mit einem Kulissenstein 15 verbunden ist. Dieser Kulissenstein 15 ist in einer Kulisse 16 geführt, deren Verlauf dem Verlauf der in Figur 1 gezeigten Schlitzführung 4 entspricht. Der Kulissenstein 15 ist über ein Kugelgelenk 17 mit einem Stößel 18 verbunden, der teleskopartig in einem Gehäuse 19 geführt ist, wobei der Stößel 18 und das Gehäuse 19 insgesamt eine Schubstange bilden. Das Gehäuse 19 ist über ein Kugelgelenk 20 am Ge-häuse 2 abgestützt. Der Stößel 18 ist, wie aus Figur 3 ersichtlich, hohl-zylindrisch ausgebildet und nimmt eine Druckfeder 21 auf, die sich am Boden des Gehäuses 19 abstützt und die bestrebt ist, die aus den Teilen 18 und 19 bestehende Schubstange in ihre ausgefahrene Lage zu drücken, die die Schubstange einnimmt, wenn sich der Betätigungsknopf 3 in einer der beiden Endlagen befindet, die beide in Figur 2 dargestellt sind. Der Betätigungsknopf 3 wird aufgrund dieser Anordnung kurz vor Erreichen seiner jeweiligen Endlage in diese gedrückt, woraus sich ein gewisser Schnappeffekt ergibt, der eine stabile Endlage bewirkt. Durch eine enge Führung des Stößels 18 in dem Gehäuse 19 bzw. durch eine entsprechende Abdichtung kann ein gewisser Dämpfungseffekt erzielt werden, so daß die Schubstange den Kulissenstein 15 und damit den Betätigungsknopf 3 nicht selbsttätig aus einer Zwischenlage in die Endlage verschieben kann. An dem Gehäuse 19 greift ein Bowdenzug 22 für die Verstellung einer Lüftungsklappe an.

Aus dieser Darstellung ist ersichtlich, daß aufgrund der Ausbildung und Anordnung der teleskopartigen Schubstange 18, 19, die mit dem Kulissenstein 15 zusammenwirkt, sich der Kulissenstein und damit auch der Betätigungsknopf 3 in parallelen Ebenen bewegen, wobei die während der Verschiebung eintretenden Abstandsänderungen zwischen dem Kulissenstein und dem Kugelgelenk 20 durch die teleskopartige Verschiebbarkeit der Schubstange 18, 19 aufgenommen wird.

## Patentansprüche

1. Bowdenzugverstellvorrichtung, insbesondere für Kraftfahrzeugheizung und -lüftung, mit einem in einem gehäusefesten Lager schwenkbar gelagerten und in zwei Hauptteile unterteilten Hebel und daran angreifendem Bowdenzug sowie einem an seinem freien Ende angeordneten Betätigungsknopf, **dadurch gekennzeichnet**, daß der erste Hauptteil des Hebels einen fest mit dem Betätigungsknopf (3) verbundenen, in einer Kulisse (16) geführten Kulissenstein (15) und der zweite Hauptteil eine teleskopartig ineinanderschiebbare Schubstange umfaßt, die einerseits einen in einem am Kulissenstein (15) angeordneten Lager (17) gelenkig gelagerten Stößel (18) und andererseits ein den Stößel (18) aufnehmendes Gehäuse (19) umfaßt, an dem der Bowdenzug (22) angreift und das in dem gehäusefesten Lager (20) gelagert ist.

2. Bowdenzugverstellvorrichtung nach Anspruch 1, **dadurch gekennzeichnet,** daß sowohl das Lager (17) am Kulissenstein (15) als auch das gehäusefeste Lager (20) als Kugelgelenk ausgebildet sind.

3. Bowdenzugverstellvorrichtung nach Anspruch 1, **dadurch gekennzeichnet,** daß sowohl das Lager am Kulissenstein (15) als auch das gehäusefeste Lager als Kreuzgelenk ausgebildet sind.

4. Bowdenzugverstellvorrichtung nach Anspruch 2 oder 3, **dadurch gekennzeichnet,** daß die Kulisse (16) nach Art einer zwei- oder dreidimensional geführten Kurvenbahn gestaltet ist.

5. Bowdenzugverstellvorrichtung nach einem der Ansprüche 1 bis 4, **dadurch gekennzeichnet,** daß die Schubstange (18, 19) in Richtung auf ihre ausgefahrene Lage durch eine Feder (21) belastet ist.

6. Bowdenzugverstellvorrichtung nach Anspruch 5, **dadurch gekennzeichnet,** daß die Feder (21) in dem den Stößel (18) aufnehmenden Gehäuse angeordnet ist.

7. Bowdenzugverstellvorrichtung nach einem der Ansprüche 1 bis 6, **dadurch gekennzeichnet,** daß die Schubstange (18, 19) als Bewegungsdämpfer ausgebildet ist.

## Claims

1. Bowden-cable adjusting device, in particular for motor-vehicle heating and ventilation, having a lever, which is mounted so as to be pivotable in a bearing fixed to the casing and is subdivided into two main parts, and a Bowden cable acting thereon as well as an actuating knob arranged on its free end, characterized in that the first main part of the lever comprises a sliding block (15) firmly connected to the actuating knob (3) and guided in a slotted link (16), and the second main part comprises a telescopic connecting rod, which comprises, on the one hand, a plunger (18) mounted in an articulated manner in a bearing (17) arranged on the sliding block (15) and, on the other hand, a housing (19), which accommodates the plunger (18) and on which the Bowden cable (22) acts and which is mounted in the bearing (20) fixed to the casing.

2. Bowden-cable adjusting device according to Claim 1, characterized in that both the bearing (17) on the sliding block (15) and the bearing (20) fixed to the casing are designed as ball-and-socket joints.

3. Bowden-cable adjusting device according to Claim 1, characterized in that both the bearing on the sliding block (15) and the bearing fixed to the casing are designed as cardan joints.

4. Bowden-cable adjusting device according to Claim 2 or 3, characterized in that the slotted link (16) is configured like a two-dimensionally or three-dimensionally directed curved path.

5. Bowden-cable adjusting device according to one of Claims 1 to 4, characterized in that the connecting rod (18, 19) is loaded in the direction of its extended position by a spring (21).

6. Bowden-cable adjusting device according to Claim 5, characterized in that the spring (21) is arranged in the housing accommodating the plunger (18).

7. Bowden-cable adjusting device according to one of Claims 1 to 6, characterized in that the connecting rod (18, 19) is designed as a motion damper.

## Revendications

1. Dispositif de réglage par câble Bowden, en particulier pour le chauffage et la ventilation d'un véhicule à moteur, comprenant un levier monté pivotant dans un palier fixe par rapport au boîtier et divisé en deux parties principales et un câble Bowden venant en prise avec celui-ci, ainsi qu'un bouton d'actionnement disposé sur son extrémité libre, **caractérisé en ce que** la première partie principale du levier comprend un coulisseau (15) guidé dans une coulisse (16), relié solidement au bouton d'actionnement (3), et la deuxième partie principale comprend une bielle rétractable téléscopiquement, qui comprend d'une part une tige-poussoir (18) montée articulée dans un palier (17) disposé sur le coulisseau (15) et d'autre part un boîtier (19) recevant la tige-poussoir (18), sur lequel le câble Bowden (22) vient en prise et qui est monté dans le palier (20) fixe par rapport au boîtier.

2. Dispositif de réglage par câble Bowden selon la revendication 1, **caractérisé en ce que** tant le palier (17) sur le coulisseau (15) que le palier (20) fixe par rapport au boîtier sont conçus en tant qu'articulation sphérique.

3. Dispositif de réglage par câble Bowden selon la revendication 1, **caractérisé en ce que** tant le palier sur le coulisseau (15) que le palier fixe par rapport au boîtier sont conçus en tant que joint universel.

4. Dispositif de réglage par câble Bowden selon la revendication 2 ou 3, **caractérisé en ce que** la coulisse (16) est formée à la manière d'un chemin incurvé guidé bidimensionnellement ou tridimensionnellement.

5. Dispositif de réglage par câble Bowden selon l'une quelconque des revendications 1 à 4, **caractérisé en ce que** la bielle (18, 19) est sollicitée dans la direction de sa position étendue par un ressort (21).

6. Dispositif de réglage par câble Bowden selon la revendication 5, **caractérisé en ce que** le ressort (21) est disposé dans le boîtier recevant la tige-poussoir (18).

7. Dispositif de réglage par câble Bowden selon l'une quelconque des revendications 1 à 6, **caractérisé en ce que** la bielle (18, 19) est conçue en tant qu'amortisseur de mouvement.
